# FASCICULE DE BREVET EUROPEEN

(11) **EP 1 263 566 B1**
(45) Date de publication et mention de la délivrance du brevet: **15.10.2003**
(21) Numéro de dépôt: 01909780.7
(22) Date de dépôt: 20.02.2001
(51) Int. Cl.: B29C 49/42, B29C 49/04

(54) **PROCEDE ET DISPOSITIF D'EXTRUSION-MOULAGE DE CORPS CREUX EN MATIERE THERMOPLASTIQUE**
VERFAHREN UND VORRICHTUNG ZUM EXTRUSIONSFORMEN VON HOHLKÖRPERN AUS KUNSTSTOFF
METHOD AND DEVICE FOR EXTRUSION-MOULDING OF HOLLOW BODIES MADE OF THERMOPLASTIC MATERIAL

(30) Priorité: 29.02.2000 BE 200000164
(43) Date de publication de la demande: 11.12.2002
(73) Titulaire: Inergy Automotive Systems Research (SA), 1120 Bruxelles (BE)
(72) Inventeur: DUPONT, Serge, B-1800 Vilvoorde (BE); CRIEL, Bjorn, B-9820 Merelbeke (BE); DE HENAU, Pascal, B-1360 Maleves-Ste-Marie (BE)
(74) Mandataire: Decamps, Alain René François
(86) Numéro de dépôt international: EP0101875
(87) Numéro de publication internationale: WO01064422

(56) Documents cités:
- EP-A- 0 927 623
- US-A- 4 747 768
- US-A- 4 777 006
- US-A- 5 264 178
- US-A- 5 464 635
- US-A- 5 792 490

## Description

La présente invention concerne un procédé d'extrusion-moulage de corps creux en matière thermoplastique permettant, en particulier, la fabrication d'un corps creux moulé de géométrie tridimensionnelle complexe.

Ces corps creux ont des applications multiples. Parmi celles-ci, on peut citer celles du domaine de l'automobile comme, par exemple, les tubulures de remplissage de réservoirs à carburant et à fluides divers tels que liquide de refroidissement du moteur, liquide du système de commande hydraulique des freins, liquide de lave-glaces ou de lave-phares, fluide frigorigène de systèmes de conditionnement d'air. Un autre groupe est encore formé par les tuyauteries de ventilation ou de transport de fluides divers. Ces tubulures de remplissage et ces tuyauteries sont positionnées et ont un parcours qui est souvent conditionné par la forme complexe et souvent exiguë de l'espace restant libre entre les composants et systèmes divers qui composent le véhicule ou son moteur. Il en résulte la nécessité croissante dans les véhicules modernes de pouvoir mettre en place des corps creux, parfois de grandes dimensions, de géométrie tridimensionnelle souvent très complexe.

Diverses solutions connues ont été apportées à ce problème, chacune apportant ses avantages particuliers.

On connaît par exemple, un procédé d'extrusion-soufflage divulgué par la demande de brevet CA-2,241,595 consistant à effectuer en séquence les opérations suivantes :
- extrusion d'une paraison comprenant de la matière thermoplastique au travers d'une tête d'extrusion,
- préhension par un robot manipulateur de la partie haute de la paraison,
- déplacement de la paraison au moyen du robot à proximité d'un modèle-guide tridimensionnel en forme d'entonnoir disposé au-dessus de la cavité d'une portion de moule horizontale,
- introduction de la paraison dans le modèle-guide par un mouvement descendant du bras du robot, suivi d'un mouvement permettant la dépose de la paraison en suivant la configuration du modèle-guide de manière telle que la paraison prenne la forme de celui-ci,
- passage de la paraison préformée du modèle-guide à la cavité de moule,
- fermeture du moule,
- soufflage de la paraison à l'intérieur du moule,
- ouverture du moule,
- démoulage de l'article.

Ce procédé connu ne fait cependant pas appel à un outil de préformage capable d'imprimer à la paraison une forme tridimensionnelle complexe.

Il présente en outre le désavantage que la dépose de la paraison dans le modèle-guide ne s'effectue pas en temps masqué avec l'opération de soufflage dans le moule de la paraison précédente, ce qui a pour conséquence de limiter la productivité du procédé global de production d'articles à un niveau peu élevé.

Par ailleurs, la dépose de la paraison dans le modèle-guide introduisant un refroidissement hétérogène de la paraison dans le sens du parcours de dépôt du fait de temps de contact décroissants des portions de paraison avec le modèle-guide au fur et à mesure que la paraison est déposée, le soufflage ultérieur dans le moule produit aussi des hétérogénéités dans les dimensions de l'article fabriqué.

On connait aussi le brevet US-4,777,006-A qui décrit un procédé d'extrusion-soufflage de corps creux incurvés en matière plastique comprenant une extrusion verticale vers le bas d'une paraison, sa prise par des moyens de support (9,14 figure 4 et 27; 28, 31, 32 figures 9 à 11) et la précourbure de la paraison par modification de la forme desdits moyens de support (revendication 1 (c).

L'invention a pour but de remédier à ces inconvénients tout en maintenant les avantages de flexibilité de manipulation et de coût de fabrication des moules liés à l'utilisation d'un robot manipulateur.

A cet effet l'invention concerne un procédé d'extrusion-moulage de corps creux en matière thermoplastique comprenant le cycle d'étapes suivantes :
a) une paraison tubulaire est extrudée selon une direction verticale et s'écoule vers le bas sous l'effet de son propre poids,
b) la paraison est prise par un robot,
c) la paraison est déposée par le robot dans un outil de préformage,
d) la paraison préformée est transférée au-dessus d'une partie inférieure d'un moule au moyen de cet outil de préformage,
e) la paraison est déposée de l'outil de préformage dans la partie inférieure du moule,
f) le moule est refermé et la paraison est moulée,
g) le moule est ouvert,
h) le corps creux est retiré du moule.

Par extrusion-moulage, on entend désigner la technique de mise en forme d'articles en matière thermoplastique comprenant une étape d'extrusion ou de coextrusion d'une préforme mono- où multicouche et une étape de moulage de cette préforme. Avantageusement, on effectue le moulage par soufflage à l'intérieur d'un moule fermé. Dans le cas d'articles se présentant sous la forme de corps creux, les préformes sont des paraisons de section fermée, en particulier tubulaires de section exempte d'angles saillants. Le plus généralement, la section de ces paraisons est circulaire ou elliptique.

Par corps creux, on désigne ici toute structure dont la surface présente au moins une partie vide ou concave. On désigne encore par "corps creux" les tubes, flacons ou réservoirs délimitant un volume fermé ou non. En particulier, le procédé selon l'invention est bien adapté à la production de corps creux qui revêtent la forme d'un tube ou d'une tubulure.

Le procédé selon l'invention s'adresse à la production de corps creux en matière thermoplastique, c'est-à-dire en matière comprenant au moins un polymère en résine de synthèse.

Tous les types de matière thermoplastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyoléfines greffées, des polyesters thermoplastiques, des polycétones, des polyamides et leurs copolymères.

Un polymère souvent employé est le polyéthylène. D'excellents résultats ont été obtenus avec du polyéthylène haute densité (PEHD).

Un copolymère souvent utilisé est le copolymère éthylène - alcool vinylique (EVOH). Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits *supra.* De telles structures multicouches peuvent être obtenues à l'aide d'une tête de coextrusion ou par une technique de recouvrement total ou partiel d'une couche substrat par une ou plusieurs autres couches. Un exemple de la technique de recouvrement est la projection de matière thermoplastique sur la couche substrat par pistolage.

Selon l'invention, le procédé comprend un certain nombre d'étapes effectuées en cycle, c'est-à-dire une séquence particulière d'étapes successives

Par extrusion d'une paraison tubulaire on désigne le processus de passage au travers d'une filière d'une composition d'au moins une matière thermoplastique fondue et homogénéisée dans une machine d'extrusion dont la tête se termine par la filière pour obtenir une paraison de section fermée, en particulier circulaire ou elliptique. Lorsque la paraison est de structure multicouche, on fait usage de plusieurs extrudeuses, une par couche présente dans la structure multicouche.

Le processus d'extrusion peut être continu. Il peut aussi, en variante, s'agir d'un processus d'extrusion à accumulation, dans un réservoir approprié disposé sur la machine d'extrusion, de matière thermoplastique à l'état fondu. Ce processus d'extrusion à accumulation permet avantageusement l'arrêt et le redémarrage rapide de l'extrusion de la paraison au travers de la filière et l'adaptation très souple aux cycles d'extrusion-moulage. Le processus d'extrusion par accumulation est particulièrement adapté aux résines thermoplastiques fluides qui ont tendance à s'allonger fortement sous leur propre poids au cours de l'expulsion hors de l'extrudeuse. Il est aussi possible, par ce processus par accumulation, de produire des paraisons comportant, sur leur longueur, des tronçons composés de matières différentes. Cette technique est appelée coextrusion séquentielle, par opposition à la coextrusion continue classique, conduisant à des structures multicouches concentriques.

Le procédé selon l'invention convient bien lorsqu'il s'agit de combiner l'utilisation d'un nombre d'extrudeuses adapté avec un nombre de dispositifs de moulage tel que les cadences respectives de chaque unité d'extrusion et de moulage soient respectées et coopèrent de manière souple pour accroître la productivité. On peut ainsi combiner l'utilisation de plusieurs extrudeuses avec un seul dispositif de moulage ou, au contraire d'une extrudeuse avec plusieurs dispositifs de moulage, selon les besoins. Il est aussi possible de combiner plusieurs extrudeuses avec plusieurs dispositifs de moulage.

Selon le procédé conforme à l'invention, la paraison est prise par un robot. Cette opération a pour but de prélever une certaine longueur de paraison tubulaire. Ceci peut se faire, par exemple, par un couteau qui vient périodiquement couper la paraison extrudée dans un plan perpendiculaire au sens de son écoulement et prise de la paraison coupée par l'organe préhenseur du robot. Une autre technique est de réaliser la coupure de la paraison en utilisant le mouvement vertical du noyau central de la tête d'extrusion (utilisé normalement pour moduler l'épaisseur de la paraison durant son expulsion), puis de prendre la paraison, dès qu'elle est coupée, au moyen de l'organe préhenseur du robot. Une autre technique possible est encore, par exemple, de pincer et détacher au moyen de l'organe préhenseur du robot lui-même, dans le voisinage proche de la filière, une longueur donnée de paraison en situation d'écoulement.

La prise de la paraison s'effectue au moyen d'un bras de robot de manipulation mécanique. Le robot peut être commandé manuellement par un opérateur. Il peut aussi, pour une partie au moins de ses mouvements, être commandé par une machine de commande et de régulation. Cette dernière peut agir, en boucle ouverte ou en boucle fermée, sous l'action d'un programme d'ordinateur préenregistré et/ou modifier ses actions en réponse à des signaux qui proviendraient de capteurs de situations diverses en provenance notamment du processus d'extrusion-moulage ou de la paraison extrudée elle-même.

Le robot peut être réalisé avec tout matériau compatible avec des paraisons dont la température est intermédiaire entre la température ambiante et la température de fusion de la matière thermoplastique comprise dans la paraison. Un matériau métallique est préféré. Particulièrement préférés sont les métaux et les alliages métalliques légers, tels que l'aluminium et ses alliages.

Selon l'invention, le robot transfère et dépose la paraison dans un outil de préformage. Cet outil a pour fonction de modifier la géométrie de la paraison extrudée avant qu'elle n'entre dans le moule où elle sera moulée.

Cet outil est un objet qui peut prendre des formes de réalisation diverses. Il est avantageux qu'il présente, dans ses parties destinées à se trouver en contact direct avec la paraison, une forme qui préfigure la forme définitive que devra prendre le corps creux que l'on désire produire, de manière à imposer à la paraison encore souple en raison de sa température proche de celle qu'elle avait au droit de la filière d'extrusion, la préforme souhaitée. L'outil de préformage peut ainsi présenter une surface plane ou incurvée selon une conformation déterminée, en fonction de la forme recherchée pour la paraison avant son introduction dans le moule. Cette propriété est particulièrement intéressante lorsque l'on vise à produire des paraisons de préforme tridimensionnelle. Elle est particulièrement avantageuse pour la production de corps creux de géométrie tridimensionnelle complexe.

Un exemple d'un tel outil est celui d'une pièce en forme de vallée rectiligne ou présentant plusieurs courbes en enfilade, dont le fond est plat ou en forme de surface réglée par des droites perpendiculaires à l'axe de la paraison. Les parois de la vallée peuvent être constituées d'une surface pleine, par exemple d'une surface plane. Elles peuvent, au contraire être formées par une association d'éléments coopérant entre eux de manière à laisser des vides dans les parois. On peut ainsi trouver des parois en forme de treillis, de grillage ou même simplement d'un alignement de tiges rectilignes ou incurvées espacées plus ou moins régulièrement.

Il est avantageux que le fond d'un tel outil sur lequel repose la paraison soit conçu de manière à pouvoir s'escamoter sur commande de façon à déposer la paraison préformée en dehors de l'outil, sous l'influence de son propre poids.

L'outil de préformage peut être réalisé avec tout matériau compatible avec les paraisons, comme déjà décrit *supra* pour le matériau du robot.

Selon le procédé conforme à l'invention, l'outil de préformage est capable de transférer la paraison au-dessus de la partie inférieure d'un moule. L'outil est en effet pourvu de moyens de déplacement pour qu'il puisse venir se positionner au-dessus de la partie basse d'un moule ouvert comprenant une cavité ayant une forme adaptée destinée à accueillir la paraison.

On peut, par exemple permettre à l'outil de s'intercaler dans l'espace libre situé entre les deux parties d'un moule en position ouverte.

L'outil de préformage peut, comme le robot, être commandé manuellement par un opérateur ou faire l'objet d'une régulation comme décrit plus haut.

La paraison est ensuite déposée dans la partie inférieure du moule. Cette dépose peut se faire par tout moyen approprié, pour autant qu'il préserve la préforme imprimée à la paraison par l'outil de préformage.

Il est possible, par exemple d'effectuer un retournement de l'outil au-dessus du moule de façon à déposer la paraison dans celui-ci.

Un autre moyen est d'employer aussi un robot mécanique de manipulation pour venir prendre la paraison préformée et la déposer dans la partie inférieure de moule, sans modifier sa géométrie.

Un moyen préféré consiste à utiliser un outil de préformage muni d'un fond escamotable sur commande, de façon à pouvoir très simplement déposer la paraison dans la partie inférieure de moule au travers du fond ouvert de l'outil correctement positionné. Cette façon de faire permet avantageusement d'approcher de près la cavité de la partie inférieure de moule et d'éviter toute déformation de la géométrie de la paraison lors de son dépôt dans le moule.

Lorsque la paraison préformée est en place dans la partie inférieure de moule, on referme celui-ci par pressage de la partie inférieure de moule sur la partie supérieure. La paraison préformée est alors moulée, par exemple, à l'aide de l'introduction d'un fluide de soufflage dans la paraison à l'intérieur du moule fermé. On peut, par exemple, réaliser cette introduction par introduction dans le moule fermé d'au moins une aiguille creuse qui vient d'abord percer la paraison à l'une de ses extrémités, puis on force le fluide de soufflage à travers l'aiguille sous une pression suffisante pour appliquer les parois de la paraison sur la totalité de la surface de la cavité du moule. Le soufflage peut aussi avantageusement être réalisé via deux aiguilles, situées chacune à une extrémité de la pièce soufflée. L'écoulement du fluide de soufflage entre les deux orifices permet alors d'augmenter significativement l'efficacité du refroidissement. Le fluide de soufflage peut être un gaz, un liquide ou une dispersion d'au moins un liquide dans un gaz. A titre de fluide sous pression, l'air comprimé a donné de bons résultats.

On peut aussi utiliser un fluide de balayage sous pression comprenant un gaz réactif. Un tel gaz réactif peut être du fluor.

On peut aussi utiliser un gaz inerte, tel que de l'azote. Un mélange de différents gaz peut aussi être utilisé, en particulier un mélange contenant au moins deux des gaz cités plus haut. Parmi les liquides, on peut avantageusement utiliser l'eau. Un fluide ayant particulièrement conduit à d'excellents résultats est une dispersion (un "spray") d'eau dans l'air comprimé.

Il est aussi possible d'effectuer un traitement de surface supplémentaire du corps creux dans le moule. On peut dans ce cas utiliser, par exemple, un gaz réactif tel que le fluor.

Après moulage, on procède à l'ouverture du moule et au retrait du corps creux produit.

L'ensemble des opérations du procédé peuvent être commandées, séquencées et/ou régulées en boucle ouverte ou fermée, ainsi qu'il a déjà été décrit plus haut à propos du robot et de l'outil de préformage. La régulation en boucle fermée est préférée.

Avantageusement, on s'arrange pour réaliser, au moins en partie, les étapes b et c du cycle suivant immédiatement un cycle donné simultanément à au moins une des étapes de ce cycle donné, de façon à effectuer, au moins en partie, un travail en temps masqué.

Selon cette façon de procéder, on peut aussi, de préférence, réaliser, au moins en partie, les étapes b et c du cycle suivant immédiatement un cycle donné simultanément à l'étape f de ce cycle donné.

On peut aussi avantageusement réaliser, au moins en partie, l'étape h de ce même cycle donné simultanément à l'étape e du cycle suivant immédiatement ce cycle donné.

De préférence, on combine les deux possibilités de travail en temps masqué décrites *supra.* L'intérêt est ici d'augmenter sensiblement la productivité globale de l'installation de production de corps creux.

Selon une forme de réalisation particulière du procédé conforme à l'invention, l'étape h est réalisée dans un dispositif de récupération. Selon cette forme de réalisation particulière, on peut, par exemple, s'arranger pour que le corps creux reste fixé à la partie supérieure du moule, après ouverture de ce dernier et positionner un panier de récupération sous la partie supérieure. Ce résultat peut s'obtenir soit de manière naturelle, en fonction du mode préféré de démoulage de la pièce, soit via des inserts mobiles de forme tronconique placés dans la cavité de la partie supérieure du moule. Ces inserts retiennent le corps creux dans la cavité supérieure lors de l'ouverture du moule et provoquent, lors de leur rétraction, la chute de ce corps creux dans le panier de récupération.

La nature du matériau constitutif du dispositif de récupération est choisie pour rester compatible avec le transport des corps creux à leur température de sortie du moule.

Des matériaux similaires à ceux décrits plus haut pour l'outil de préformage conviennent bien aussi pour la réalisation du dispositif de récupération.

On peut aussi combiner avec cette forme de réalisation particulière du dispositif de récupération du corps creux l'utilisation d'un dispositif d'extraction du corps creux pour le faire tomber par gravité dans le dispositif de récupération. Un exemple de pareil dispositif d'extraction comprend la pénétration d'au moins un petit vérin à l'intérieur du volume de la cavité supérieure du moule, de manière à pousser le corps creux hors de cette cavité et de produire sa chute via son décoincement hors de la cavité.

Avantageusement, le procédé selon l'invention est bien adapté à la réalisation de tubulures en matière thermoplastique destinées au transport de carburant. En particulier, il convient bien pour la réalisation de tubulures de remplissage de réservoirs à carburant. Il est tout particulièrement intéressant lorsque ces tubulures de remplissage doivent présenter une forme tridimensionnelle complexe.

L'invention concerne aussi un dispositif d'extrusion-moulage de corps creux, comprenant une extrudeuse pouvant délivrer, selon une direction verticale, une paraison tubulaire en matière thermoplastique s'écoulant vers le bas sous l'effet de son propre poids et un moule en deux parties destiné à la réception d'une telle paraison et à son moulage, qui comprend un robot capable de prendre la paraison à la sortie de l'extrudeuse, de la transférer et de la déposer dans un outil de préformage. Lorsque la paraison est de structure multicouche, on fait usage de plusieurs extrudeuses, une par couche présente dans la structure multicouche.

Dans la description donnée ici de ce dispositif, les termes extrusion-moulage, corps creux, paraison tubulaire, matière thermoplastique, moule, soufflage, robot, outil de préformage ont la même signification que celle donnée *supra* pour le procédé.

De préférence, l'outil de préformage est muni de moyens de transfert de la paraison préformée dans une partie du moule ouvert. Ces moyens de transfert de l'outil de préformage sont les mêmes que ceux déjà décrits plus haut pour le procédé.

Une forme de réalisation préférée du dispositif selon l'invention comprend un robot, un outil de préformage et des parties de moule qui peuvent se déplacer en temps simultané, au moins en partie.

Avantageusement, l'outil de préformage peut aussi être muni d'un système de conditionnement en température. Ceci permet d'éviter le refroidissement trop important de la paraison de même que toute hétérogénéité thermique de celle-ci.

Une autre forme de réalisation intéressante du dispositif selon l'invention est de le munir d'un dispositif de récupération du corps creux lors de l'ouverture du moule.

Ce dispositif de récupération est semblable à ceux déjà décrits *supra* pour le procédé.

Le dispositif selon l'invention convient très bien à la réalisation de corps creux extrudés et moulés pour servir de tubulures pour carburant. Pareilles tubulures sont, par exemple, les lignes ou conduites de transport de carburant dans les véhicules automobiles à moteur thermique. Elles peuvent aussi être des tubulures de remplissage de carburant montées sur les réservoirs destinés à contenir ces carburants. Le dispositif selon l'invention convient tout particulièrement bien lorsque les tubulures présentent des formes tridimensionnelles complexes.

### Exemple

L'exemple qui suit est donné à titre d'illustration de l'invention, sans vouloir en limiter sa portée.

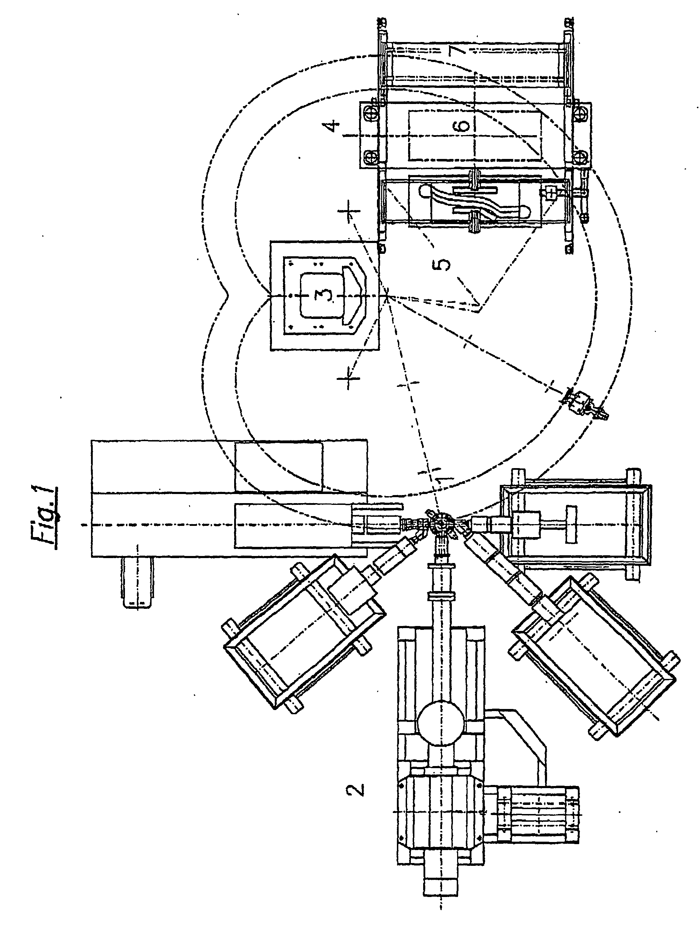

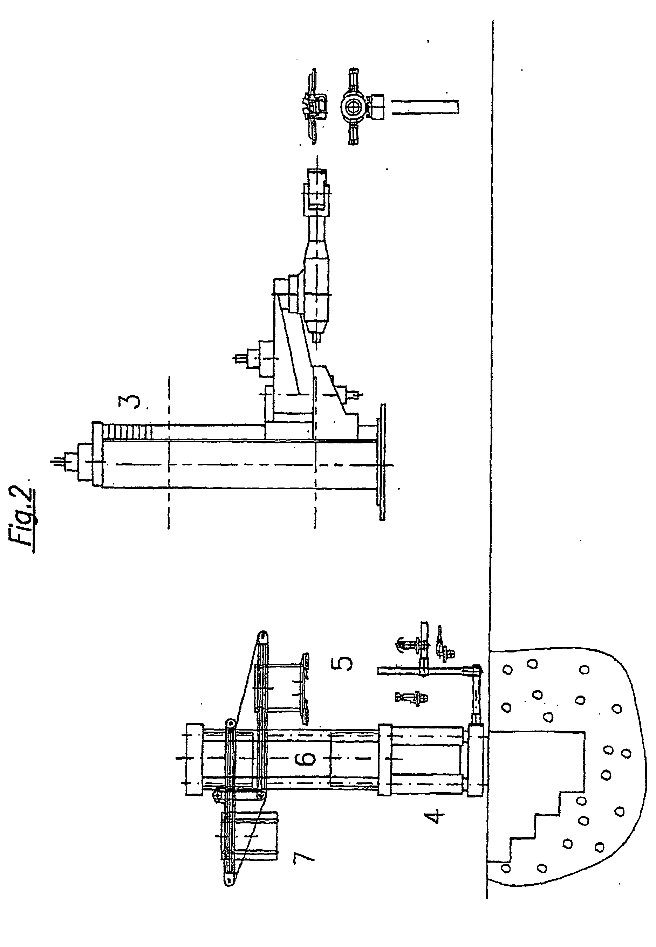

Dans une réalisation concrète du procédé, on utilise le dispositif décrit aux figures 1 (vue de dessus) et 2 (vue de côté) : une tête d'extrusion multicouche (1) est alimentée par cinq extrudeuses (2). En fin d'expulsion d'une longueur utile de paraison, celle-ci est prise dans sa partie supérieure par le robot (3) qui la dépose dans l'outil de préformage (6); en fin de dépose, l'outil de préformage est introduit par un mouvement horizontal dans la presse (4) de manière à placer la paraison dans la partie inférieure du moule de soufflage (5). En fin de cycle, la pièce, maintenue dans la cavité supérieure lors de l'ouverture du moule, est extraite via le dispositif de récupération (7).

## Revendications

1. Procédé d'extrusion-moulage de corps creux en matière thermoplastique comprenant le cycle d'étapes suivantes :
a) une paraison tubulaire est extradée (1,2) selon une direction verticale et s'écoule vers le bas sous l'effet de son propre poids,
b) la paraison est prise par un dispositif (3) de manipulation mécanique,
c) la paraison est transférée et déposée par le dispositif (3) dans un outil de préformage (6),
d) la paraison préformée est transférée au-dessus d'une partie inférieure d'un moule (5) au moyen de cet outil de préformage (6),
e) la paraison est déposée de l'outil de préformage (6) dans la partie inférieure du moule (5),
f) le moule (5) est refermé et la paraison est moulée,
g) le moule (5) est ouvert,
h) le corps creux est retiré du moule (5), **caractérisé en ce que** l'outil de préformage (6) est distinct du dispositif (3) de manipulation mécanique, **en ce qu'**avant d'être prise par le dispositif de manipulation mécanique, la paraison est prélevée sur une certaine longueur et **en ce que** la prise de cette paraison ainsi que le dépôt dans l'outil de préformage s'effectuent au moyen d'un bras de ce dispositif de manipulation mécanique agissant comme un robot.

2. Procédé selon la revendication précédente, **caractérisé en ce que** les étapes b et c du cycle suivant immédiatement un cycle donné sont effectuées, au moins en partie, simultanément à au moins une des étapes de ce cycle donné.

3. Procédé selon la revendication 2, **caractérisé en ce que** les étapes b et c du cycle suivant inimédiatement un cycle donné sont effectuées, au moins en partie, simultanément à l'étape f de ce cycle donné.

4. Procédé selon une quelconque des revendications précédentes, **caractérisé en ce que** l'étape h d'un cycle donné est effectuée, au moins en partie, simultanément à l'étape e du cycle suivant immédiatement ce cycle donné.

5. Procédé selon la revendication précédente, **caractérisé en ce qu'**on actionne un dispositif d'extraction du corps creux pour le faire tomber par gravité dans un dispositif de récupération (7).

6. Dispositif d'extrusion-moulage de corps creux comprenant au moins une extrudeuse (1, 2) pouvant délivrer, selon une direction verticale, une paraison tubulaire en matière thermoplastique s'écoulant vers le bas sous l'effet de son propre poids, un dispositif de manipulation mécanique, un outil de préformage et un moule (5) en deux parties destiné à la réception d'une telle paraison et à son moulage, **caractérise en ce que** le dispositif de manipulation est un robot (3) muni d'un bras capable de prélever une certaine longueur de paraison à la sortie de l'extrudeuse, de la prendre, de la transférer et de la déposer dans un outil de préformage (6) distinct du robot.

7. Dispositif selon la revendication précédente, **caractérisé en ce que** l'outil de préformage (6) est muni de moyens de transfert de la paraison préformée dans une partie du moule ouvert (5).

8. Dispositif selon une quelconque des revendications 6 et 7, **caractérisé en ce que** le robot (3) , l'outil de préformage (6) et les parties (5) de moule peuvent se déplacer en temps simultané.

9. Dispositif selon une quelconque des revendications 5 à 7, **caractérisé en ce que** l'outil de préformage (6) est conditionné en température.

10. Dispositif selon la revendication 6, **caractérisé en ce que** les corps creux qui sont extrudés et moulés sont des tubulures pour carburant.

## Patentansprüche

1. Verfahren zum Extrusionsformen von Hohlkörpern aus thermoplastischem Material mit dem folgenden Schrittzyklus:
a) ein schlauchförmiger Rohling (1, 2) wird in einer vertikalen Richtung extrudiert und erstreckt sich unter dem Eigengewicht nach unten,
b) der Rohling wird in einer mechanischen Handhabungsvorrichtung (3) erfaßt,
c) der Rohling wird transferiert und durch die Vorrichtung (3) in einem Vorformungswerkzeug (6) angeordnet,
d) der vorgeformte Rohling wird mit Hilfe des Vorformungswerkzeuges (6) oberhalb eines unteren Teiles einer Form (5) transferiert,
e) der Rohling wird von dem Vorformungswerkzeug (6) im unteren Teil der Form (5) angeordnet,
f) die Form (5) wird geschlossen und der Rohling wird geformt,
g) die Form (5) wird geöffnet,
h) der Hohlkörper wird aus der Form (5) entfernt, **dadurch gekennzeichnet, daß** das Vorformungswerkzeug (6) von der mechanischen Handhabungsvorrichtung (3) verschieden ist, wobei eine bestimmte Länge des Rohlings vor dem Ergreifen durch die mechanische Handhabungsvorrichtung bereitgestellt wird, und daß das Ergreifen des Rohlings sowie das Anordnen im Vorformungswerkzeug mit Hilfe eines Armes der mechanischen Handhabungsvorrichtung erfolgt, der als Roboter wirkt.

2. Verfahren nach dem vorhergehenden Anspruch, **dadurch gekennzeichnet, daß** die Schritte b und c des Zyklus, der unmittelbar auf einen gegebenen Zyklus folgt, zumindest teilweise gleichzeitig mit einem der Schritte des gegebenen Zyklus ausgeführt werden.

3. Verfahren nach Anspruch 2, **dadurch gekennzeichnet, daß** die Schritte b und c des Zyklus, der unmittelbar auf einen gegebenen Zyklus folgt, zumindest teilweise gleichzeitig mit dem Schritt f des gegebenen Zyklus ausgeführt werden.

4. Verfahren nach einem der vorhergehenden Ansprüche, **dadurch gekennzeichnet, daß** der Schritt h eines gegebenen Zyklus zumindest teilweise gleichzeitig mit dem Schritte des auf den gegebenen unmittelbar folgenden Zyklus ausgeführt wird.

5. Verfahren nach einem der vorhergehenden Ansprüche, **dadurch gekennzeichnet, daß** man eine Austragvorrichtung für den Hohlkörper betätigt, um den Hohlkörper durch Schwerkraft in eine Auffangvorrichtung (7) fallen zu lassen.

6. Vorrichtung zum Extrusionsformen von Hohlkörpern mit zumindest einem Extruder (1, 2), der einen schlauchförmigen Rohling aus thermoplastischem Material in einer vertikalen Richtung abgibt, welcher sich unter dem Eigengewicht nach unten erstreckt, wobei eine mechanische Handhabungsvorrichtung, ein Vorformungswerkzeng und eine Form (5) aus zwei Teilen vorgesehen sind, die zur Aufnahme eines solchen Rohlings und zu seiner Formung bestimmt ist, **dadurch gekennzeichnet, daß** die Handhabungsvorrichtung ein Roboter (3) ist, der mit einem Arm ausgestattet ist, welcher befähigt ist, eine bestimmte Länge des Rohlings am Ausgang des Extruders aufzunehmen, zu transferieren und in einem Vorformungswerkzeug (6) anzuordnen, das vom Roboter verschieden ist.

7. Vorrichtung nach einem der vorhergehenden Ansprüche, **dadurch gekennzeichnet, daß** das Vorformungswerkzeug (6) mit Mitteln zum Überführen des vorgeformten Rohlings in einen offenen Teil der Form (5) ausgestattet ist.

8. Vorrichtung nach den Ansprüchen 6 und 7, **dadurch gekennzeichnet, daß** sich der Roboter, das Vorformungswerkzeug (6) und die Teile der Form (5) gleichzeitig bewegen können.

9. Vorrichtung nach einem der Ansprüche 5 bis 7, **dadurch gekennzeichnet, daß** das Vorformungswerkzeug (6) ein temperaturkonditioniertes Werkzeug ist.

10. Vorrichtung nach Anspruch 6, **dadurch gekennzeichnet, daß** die Hohlkörper, die extrudiert und geformt werden, Rohre für Kraftstoff sind.

## Claims

1. Process for the extrusion-moulding of hollow bodies made of a thermoplastic, comprising the cycle of the following steps:
a) a tubular parison is extruded (1, 2) in a vertical direction and it flows downwards under the effect of its own weight;
b) the parison is gripped by a mechanical handling device (3);
c) the parison is transferred and deposited in a preforming tool (6) by the device (3);
d) the preformed parison is transferred to above a lower part of a mould (5) by means of this preforming tool (6);
e) the parison is deposited from the preforming tool (6) in the lower part of the mould (5);
f) the mould (5) is closed and the parison is moulded;
g) the mould (5) is opened; and
h) the hollow body is removed from the mould (5),
**characterized in that** the preforming tool (6) is separate from the mechanical .handling device (3), **in that**, before the parison is gripped by the mechanical handling device, the said parison is taken away over a certain length and **in that** the gripping of this parison and the deposition in the preforming tool are performed by means of an arm of this mechanical handling device acting as a robot.

2. Process according to the preceding claim, **characterized in that** steps b and c of the cycle immediately following a given cycle are carried out, at least in part, simultaneously with at least one of the steps of this given cycle.

3. Process according to Claim 2, **characterized in that** steps b and c of the cycle immediately following a given cycle are carried out, at least in part, simultaneously with step f of this given cycle.

4. Process according to any one of the preceding claims, **characterized in that** step h of a given cycle is carried out, at least in part, simultaneously with step e of the cycle immediately following this given cycle.

5. Process according to the preceding claim, **characterized in that** a device for extracting the hollow body is actuated in order to make it drop under gravity into a recovery device (7).

6. Device for the extrusion-moulding of hollow bodies, comprising at least one extruder (1, 2) capable of delivering, in a vertical direction, a tubular parison made of a thermoplastic, flowing downwards under the effect of its own weight, a mechanical handling device, a preforming tool and a two-part mould (5) intended for receiving such a parison and for moulding it, **characterized in that** the handling device is a robot (3) equipped with an arm capable of taking away a certain length of the parison after it leaves the extruder, of gripping it, of transferring it and of depositing it in a preforming tool (6) which is separate from the robot.

7. Device according to the preceding claim, **characterized in that** the preforming tool (6) is provided with means for transferring the preformed parison into part of the open mould (5).

8. Device according to either of Claims 6 and 7, **characterized in that** the robot (3), the preforming tool (6) and the mould parts (5) may move simultaneously.

9. Device according to any one of Claims 5 to 7, **characterized in that** the preforming tool (6) is temperature conditioned.

10. Device according to Claim 6, **characterized in that** the hollow bodies which are extruded and moulded are tubings for fuel.
